# EUROPÄISCHE PATENTANMELDUNG

(11) **EP 1 191 354 A1**
(43) Veröffentlichungstag der Anmeldung: **27.03.2002**
(21) Anmeldenummer: 00120519.4
(22) Anmeldetag: 20.09.2000
(51) Int. Cl.: G01V 15/00, G02B 6/44

(54) **Ortungsvorrichtung zur Identifizierung und/oder Lagebestimmung von erdverlegten Kabeln für optische Nachrichtenübertragung, insbesondere Glasfaserkabeln**

(71) Anmelder: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Honke, Manfred, Dr.-Ing.

(57) **Zusammenfassung**

Es handelt sich um eine Ortungsvorrichtung zur Identifizierung und/oder Lagebestimmung von erdverlegten Kabeln (1) für optische Nachrichtenübertragung, mit einem oder mehreren Schwingkreisen (5) und mit einem Detektor (4). Die Schwingkreise sind im Kabelmantel (3) oder in den Verbindungsbereichen (6) der einen Kabelstrang bildenden Kabelschüsse (7) derart angeordnet, dass die elektromagnetischen Feldlinien im Bereich der Erdoberfläche mit einer definierten Krümmung verlaufen und in Richtung des erdverlegten Kabelstranges zeigen.

## Beschreibung

Die Erfindung betrifft eine Ortungsvorrichtung zur Identifizierung und/oder Lagebestimmung von erdverlegten Kabeln für optische Nachrichtenübertragung, insbesondere Glasfaserkabeln, mit zumindest einem Lichtwellenleiter und einem Kabelmantel.

Ein ständiges Problem besteht darin, erdverlegte Kabel für optische Nachrichtenübertragung zu identifizieren und deren Lage zu bestimmen. Es kann grundsätzlich auch für unter Wasser verlegte Kabel gelten. - Regelmäßig werden Kabel für optische Nachrichtenübertragung und insbesondere Glasfaserkabel in unterirdischen Kabelschutzrohren verlegt und auf diese Weise gegen das Umfeld geschützt. Nach Verlegen der Kabelschutzrohre unter Bildung eines Rohrstranges werden die Glasfaserkabel - wie im Übrigen auch Kupferkabel - in den Rohrstrang eingeblasen oder auch eingezogen. Da derart verlegte Kabel für optische Nachrichtenübertragung im Allgemeinen nicht kartografiert werden, besteht im Rahmen von Wartungs-, Reparatur- und/oder Ausbauarbeiten eine Schwierigkeit darin, die Kabel aufzufinden. Selbst wenn eine derartige Suche erfolgreich verlaufen sollte, ist doch nicht sichergestellt, ob es sich tatsächlich um den gewünschten Kabelstrang mit den gesuchten Kabeln handelt. Ein anderes Problem besteht darin, dass derartige Kabelstränge bei Erdarbeiten nicht beschädigt werden dürfen. Aus diesem Grunde kennt man eine Warnvorrichtung für erdverlegte Kabel- und Rohrleitungen, die im Wesentlichen aus einem detektierbaren Trassenband besteht. Dabei handelt es sich um einen Kunststoffstreifen mit zwei oder mehr längslaufenden, metallischen Leitern und zugehörigen leiterspezifischen Verbindern, deren Vorhandensein infolge elektrischer Warnwirkung mit Hilfe handelsüblicher Ortungsgeräte detektiert werden sollen. - Eine derartige Warnvorrichtung ist jedoch zur Identifizierung und exakten Lagebestimmung von erdverlegten Kabeln für optische Nachrichtenübertragung kaum geeignet.

Ferner kennt man das Einziehen eines elektrisch leitfähigen Kabels in Rohrleitungen, an welches ein Sender galvanisch oder induktiv angekoppelt ist. Derartige elektrische leitfähige Kabel können jedoch nicht permanent eingezogen bleiben, weil aus einem eventuellen Blitzeinschlag erhebliche Gefahren resultieren.

Endlich ist die Verwendung von passiven Schwingkreisen in der Ausführungsform von sogenannten Markern bekannt, welche über Rohrleitungen und folglich separat von diesen Rohrleitungen in den Boden eingegraben und mit entsprechenden Empfängern geortet werden können. Derartige Marker erzeugen kugelförmige elektromagnetische Felder ohne Ausrichtung. Folglich können weder der Verlauf der Rohrleitung noch deren Verlegetiefe hinreichend genau und allenfalls mit erheblichen Schwierigkeiten bestimmt werden. - Im Übrigen ist durch diese bekannten Maßnahmen die Identifizierung und/oder Lagebestimmung von erdverlegten Kabeln für optische Nachrichtenübertragung nicht maßgebend beeinflusst worden.

Der Erfindung liegt die Aufgabe zugrunde, eine Ortungsvorrichtung zu schaffen, mit deren Hilfe sich erdverlegte Kabel und insbesondere Glasfaserkabel für optische Nachrichtentechnik eindeutig identifizieren und hinsichtlich ihrer Lage exakt bestimmen lassen.

Zur Lösung dieser Aufgabe lehrt die Erfindung eine Ortungsvorrichtung zur Identifizierung und/oder Lagebestimmung von erdverlegten Kabeln für optische Nachrichtenübertragung, insbesondere Glasfaserkabeln, mit zumindest einem Lichtwellenleiter und einem Kabelmantel, mit einem oder mehreren Schwingkreisen oder Transpondern und mit einem Detektor, wobei die Schwingkreise oder Transponder an/in dem Kabelmantel und/oder in den Verbindungsbereichen der einen Kabelstrang bildenden Kabelschüsse und/oder in dem Kabelstrang derart angeordnet sind, dass die elektromagnetischen Feldlinien im Bereich der Erdoberfläche mit einer definierten Krümmung verlaufen und in Richtung des erdverlegten Kabelstranges zeigen. - Diese Maßnahmen der Erfindung haben zur Folge, dass eine Ortung der jeweiligen Schwingkreise oder Transponder des betreffenden Kabels mit Ortungs- bzw. Lesesystemen und folglich Detektoren erfolgen können, welche mit entsprechenden Spulen oder Antennen ausgerüstet sind und horizontal auf der Erdoberfläche bewegt werden können. Werden die Spulen oder Antennen eines solchen Ortungs- bzw. Lesesystems bzw. Detektors parallel zur Kabelstrangrichtung gedreht, dann zeigt sich das an einem Maximum der von den vorhandenen Schwingkreisen bzw. Transpondern erzeugten elektromagnetischen Feldstärke an. Somit kann die Richtung des Kabelstranges identifiziert werden. Darüber hinaus ist aber auch eine Lagebestimmung möglich, weil die Lage des Kabelstranges durch ein Verschieben des Ortungs- bzw.

Lesesystems oder dergleichen Detektors senkrecht zur Kabelachse ermittelt werden kann. Die Tiefe des Kabelstranges wird im Rahmen der Erfindung durch einen Vergleich der Feldstärke der Ferritspulen der Schwingkreise oder Transponder mit der Feldstärke einer zweiten Detektorspule errechnet. In diesem Zusammenhang ist von erfindungswesentlicher Bedeutung, dass die Schwingkreise oder Transponder sich unmittelbar an oder in dem Kabelstrang befinden und dadurch nicht nur eine Identifizierung, sondern auch eine besonders exakte Lagebestimmung des Kabelstranges und folglich der Kabel für optische Nachrichtenübertragung möglich macht.

In diesem Zusammenhang geht die Erfindung von der Erkenntnis aus, dass die Signalübertragung bei Kabeln für optische Nachrichtenübertragung von elektromagnetischen Einflüssen unberührt bleibt.

Weitere erfindungswesentliche Merkmale sind im folgenden aufgeführt. So sieht die Erfindung vor, dass die Schwingkreise oder Transponder im Wege der Extrusion in die Kabelmantelaußenwand oder in die Kabelmantelinnenwand eines beispielsweise aus Kunststoff bestehenden Kabelmantels integriert sind, so dass die Schwingkreise oder Transponder beim Einziehen der Kabel und insbesondere Glasfaserkabel in ein Kabelschutzrohr ebenso wenig stören wie die ummantelten Lichtwellenleiter. Weiter lehrt die Erfindung, dass die Ferritspulen der Schwingkreise oder Transponder in axialer Ausrichtung und in vorgegebenen Abständen in den Kabelschüssen oder deren Verbindungsbereichen angeordnet sind. Die Zentrierung der Schwingkreise oder Transponder erlaubt neben der Bestimmung des Richtungsverlaufes des Kabelstranges auch dessen Lagebestimmung. Grundsätzlich empfiehlt es sich, die Innenseiten von z.B. Ferritspulen zylindrisch, konisch, doppelkonisch oder mit ähnlicher Geometrie auszubilden. Denn durch eine derartige Kontur der Spuleninnenseite wird außerhalb der Ferritspulen im Bereich der Erdoberfläche ein zur Auswertung definierter Verlauf der elektromagnetischen Feldlinien erzeugt. Das Aufsuchen von in vorgegebenen Abständen in dem Kabelstrang angebrachten Schwingkreisen bzw. Transpondern erfolgt durch Messung und Verfolgung der Richtung des betreffenden Kabelstranges. Im Übrigen können die Schwingkreise oder Transponder als aktive oder passive Schwingkreise oder Transponder ausgebildet sein, die beispielsweise in einem Langwellenbereich mit Eigenfrequenzen unterhalb von 150 kHz vorzugsweise 135 kHz arbeiten. Üblicherweise erfolgt die Energieversorgung der passiven Schwingkreise oder Transponder durch eine von dem Ortungs- bzw. Lesesystem oder dergleichen Detektor ausgesandte elektromagnetische Energie. Hierbei kann es sich um spezielle Signale handeln. Im Allgemeinen geht man jedoch so vor, dass die von dem Ortungs- bzw. Lesesystem ausgesandte elektromagnetische Energie durch von den Schwingkreisen oder Transpondern kabelspezifisch zu verändernde Signale übertragen wird. Diese zu verändernden Signale dienen gleichzeitig der Energieübertragung auf die Schwingkreise oder Transponder. Die Signale lassen sich permanent oder periodisch übertragen. - Aktive Schwingkreise oder Transponder weisen eine eigene Energieversorgung in Form beispielsweise eines Energiespeichers, z.B. einer Batterie auf. Bei Transpondern dient der Energiespeicher im Allgemeinen dazu, die rohr- und/oder lagespezifischen Daten abzuspeichern. Eine entsprechende Aussendung dieser Daten erfolgt gesteuert von einem Mikroprozessor. Auch in diesem Fall können die von dem Transponder ausgesandten Signale permanent oder periodisch übertragen werden, wobei ein bidirektionaler Datenaustausch zwischen dem Ortungs- bzw. Lesesystem und den Transpondern stattfindet.

Im folgenden wird die Erfindung anhand einer lediglich ein Ausführungsbeispiel darstellenden Zeichnung näher erläutert. Es zeigen:

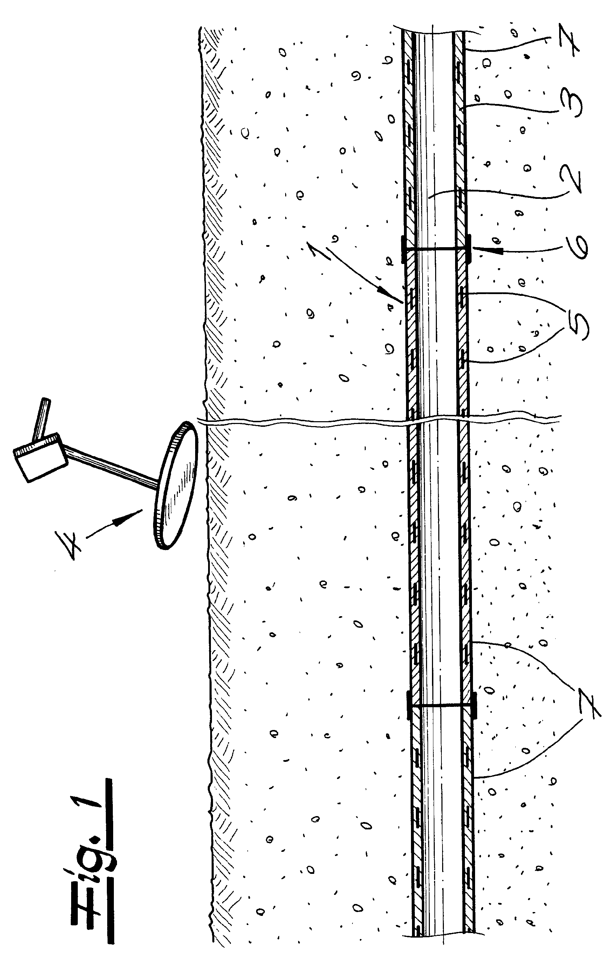

- Fig. 1: in schematischer Darstellung ausschnittsweise einen Kabelstrang aus Kabelschüssen von Glasfaserkabeln mit im Kabelmantel angeordneten Schwingkreisen und einem auf der Erdoberfläche bewegten Ortungs- bzw. Lesegerät,

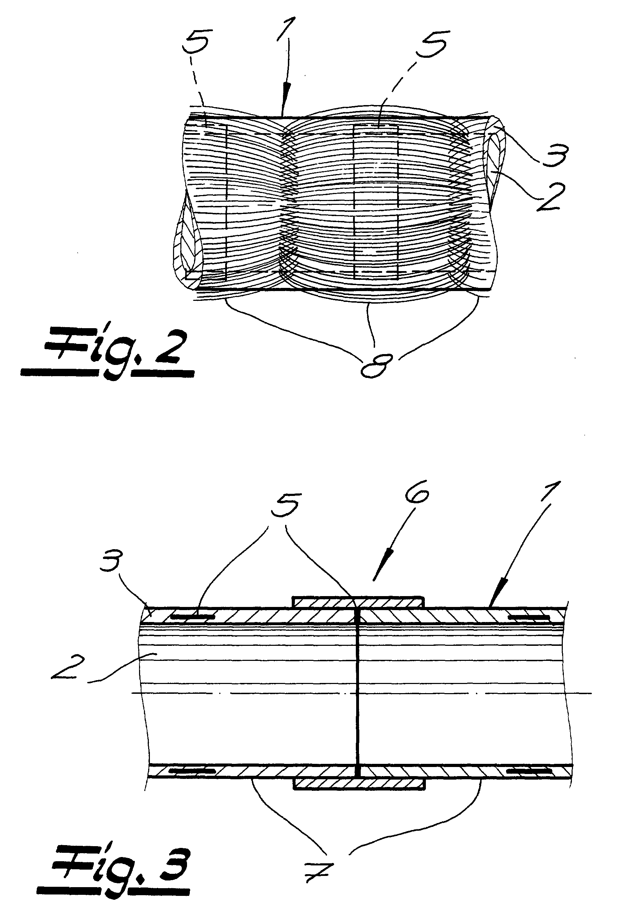

- Fig. 2: eine Draufsicht auf den Gegenstand nach Fig. 1 im Bereich eines Schwingkreises,
- Fig. 3: teilweise den Gegenstand nach Fig. 1 mit einer Anordnung der Schwingkreise in den Verbindungsbereichen der Kabelschüsse, und

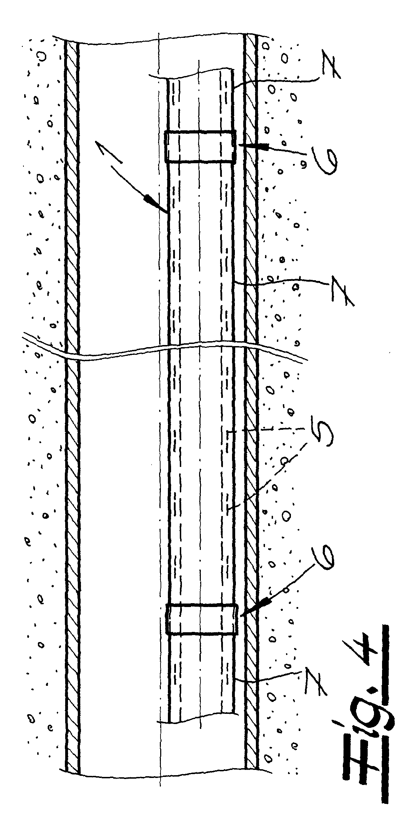

- Fig. 4: ausschnittsweise den Gegenstand nach Fig. 1 mit einem in einem Kabelschutzrohr verlegten Glasfaserkabel.

In den Figuren ist eine Ortungsvorrichtung zur Identifizierung und Lagebestimmung von erdverlegten Kabeln 1 für optische Nachrichtenübertragung dargestellt. Bei diesen Kabeln 1 handelt es sich um solche mit einem oder mehreren Lichtwellenleitern 2 und einem Kabelmantel 3 aus z.B. Kunststoff. Für eine faseroptische Nachrichtenübertragung finden Glasfaserkabel Verwendung. Diese Ortungsvorrichtung weist ein Ortungs- bzw. Lesegerät und folglich einen Detektor 4 auf, ferner Schwingkreise 5, welche an/in dem Kabelmantel 3 und/oder in den Verbindungsbereichen 6 der einen Kabelstrang bildenden Kabelschüsse 7 und folglich in dem Kabelstrang derart angeordnet sind, dass die elektromagnetischen Feldlinien 8 im Bereich der Erdoberfläche mit einer definierten Krümmung verlaufen und in Richtung des erdverlegten Kabelstranges zeigen - wie das angedeutet ist. Die Schwingkreise 5 sind im Wege der Extrusion in die Kabelaußenwand oder Kabelinnenwand des aus beispielsweise Kunststoff bestehenden Kabelmantels 3 integriert worden.

Die Ferritspulen der Schwingkreise 5 sind in axialer Ausrichtung und in vorgegebenen Abständen in den Kabelschüssen 7 oder in deren Verbindungsbereichen 6 angeordnet. Die Innenseiten der Ferritspulen sind nach dem Ausführungsbeispiel zylindrisch und die Schwingkreise 5 als passive Schwingkreise ausgebildet.

## Patentansprüche

1. Ortungsvorrichtung zur Identifizierung und/oder Lagebestimmung von erdverlegten Kabeln (1), insbesondere Glasfaserkabeln, für optische Nachrichtenübertragung, mit zumindest einem Lichtwellenleiter (2) und einem Kabelmantel (3), ferner mit einem oder mehreren Schwingkreisen (5) oder Transpondern und mit einem Detektor (4), wobei die Schwingkreise (5) oder Transponder an/in dem Kabelmantel (3) und/oder in den Verbindungsbereichen (6) der einen Kabelstrang bildenden Kabelschüsse (7) und/oder in dem Kabelstrang derart angeordnet sind, dass die elektromagnetischen Feldlinien (8) im Bereich der Erdoberfläche mit einer definierten Krümmung verlaufen und in Richtung des erdverlegten Kabelstranges zeigen.

2. Ortungsvorrichtung nach Anspruch 1, **dadurch gekennzeichnet, dass** die Schwingkreise (5) oder Transponder im Wege der Extrusion in die Kabelaußenwand oder Kabelinnenwand des Kunststoff bestehenden Kabelmantels (3) integriert sind.

3. Ortungsvorrichtung nach Anspruch 1 oder 2, **dadurch gekennzeichnet, dass** beispielsweise Ferritspulen der Schwingkreise (5) oder Transponder in axialer Ausrichtung und in vorgegebenen Abständen in den Kabelschüssen (7) oder deren Verbindungsbereichen (6) angeordnet sind.

4. Ortungsvorrichtung nach einem der Ansprüche 1 bis 3, **dadurch gekennzeichnet, dass** die Innenseiten der Ferritspulen zylindrisch, konisch, doppelkonisch oder mit ähnlicher Geometrie ausgebildet sind.

5. Ortungsvorrichtung nach einem der Ansprüche 1 bis 4, **dadurch gekennzeichnet, dass** die Schwingkreise (5) oder Transponder als aktive oder passive Schwingkreise oder Transponder ausgebildet sind.
